# EUROPEAN PATENT SPECIFICATION

(11) **EP 3 559 584 B1**
(45) Date of publication and mention of the grant of the patent: **01.09.2021**
(21) Application number: 17835677.0
(22) Date of filing: 21.12.2017
(51) Int. Cl.: F28F 9/02

(54) **HEAT EXCHANGER**
WÄRMETAUSCHER MIT ANGESCHWEISSTEM SAMMLER
ÉCHANGEUR DE CHALEUR AVEC COLLECTEUR SOUDÉ AU CEUR

(30) Priority: 23.12.2016 EP 16461579
(43) Date of publication of application: 30.10.2019
(73) Proprietor: Alfa Laval Corporate AB, 221 00 Lund (SE)
(72) Inventor: ANIKIEL, Konrad, 81-611 Gdynia (PL)
(74) Representative: Alfa Laval Attorneys
(86) International application number: PCT/EP2017/084036
(87) International publication number: WO 2018/115253

(56) References cited:
- JP-A- S59 200 197
- JP-A- 2016 205 024
- JP-U- H01 129 591
- US-A- 5 607 259
- US-A1- 2005 034 846
- US-A1- 2011 047 899
- US-A1- 2013 175 014
- Siebel, E.; Schwaigerer, S.: "Ebene Böden mit Entlastungsnut"; "9.3" In: S. Schwaigerer: "Festigkeitsberechnung im Dampfkessel-, Behälter- und Rohrleitungsbau", 1983, Springer Verlag, Berlin, Heidelberg, XP002771598, pages 152-154, figure 9.16

## Description

### TECHNICAL FIELD

This disclosure relates to a heat exchanger comprising a heat exchanger core having a first heat exchange passage for a first working fluid intended to be involved in a heat exchange process, and a second heat exchange passage for a second working fluid intended to be involved in the heat exchange process. The heat exchanger further comprising a header comprising a duct for conveying working fluid to or from at least one of the first and second heat exchange passages, wherein the header being welded to the heat exchanger core along a header-to-core joint. The disclosure also relates to a method for manufacturing such a heat exchanger. The heat exchanger is particularly suitable for high pressure environment where a compact design is desired.

### BACKGROUND

It is generally a constant desire to increase robustness and cost efficiency of heat exchangers. One example of improved heat exchanger cost efficiency is disclosed in JPS59200197, which shows that a width of a plastically worked tube plate may be shortened and the amount of machining may be reduced by providing a recess portion on the tube plate side, and which shows the preamble of claim 1 and claim 20. While the known heat exchanger is satisfactory for its intended use, such heat exchanger is nonetheless susceptible to improvement in terms of improved robustness and cost efficiency.

### SUMMARY

An object of the present disclosure is to provide a heat exchanger, and method of manufacturing such a heat exchanger, having at least partly improvement robustness and/or cost efficiency. This object is achieved by the features of the independent claims.

The disclosure concerns a heat exchanger comprising a heat exchanger core having a first heat exchange passage for a first working fluid intended to be involved in a heat exchange process, and a second heat exchange passage for a second working fluid intended to be involved in the heat exchange process. The heat exchanger further comprises a header having a duct for conveying working fluid to or from at least one of the first and second heat exchange passages, wherein the header is welded to the heat exchanger core along a header-to-core joint. The heat exchanger core has a groove extending at least partly along the header-to-core joint, wherein a cross-section of the groove has a rounded shape with a depth of the groove larger than half the width of the groove. The rounded shape of the cross-section of the groove defines a finite curvature radius at the header-to-core joint.

The disclosure also concerns a method for manufacturing a heat exchanger comprising a heat exchanger core having a plurality of heat exchange passages and a header for conveying working fluid to or from the plurality of heat exchange passages. The method comprises providing a heat exchanger core; machining a groove in the heat exchanger core at least partly along an intended header-to-core joint, wherein a cross-section of the groove has a rounded shape with a depth of the groove larger than half the width of the groove and the rounded shape of the cross-section of the groove defines a finite curvature radius at the header-to-core joint, and welding the header to the heat exchanger core to form said header-to-core joint.

By providing a groove extending at least partly along the header-to-core joint, wherein a cross-section of the groove has a rounded shape with a depth of the groove larger than half the width of the groove, several advantages are obtained.

For example, header-to-core joints of a heat exchanger tend to have high peak stress to the localized bending, and high localized stress is typically detrimental in non-immediate damage mechanisms, such as fatigue, stress corrosion cracking, creep, thermal ratcheting, etc. However, the specific cross-sectional shape of the groove with a rounded shape and a depth of the groove larger than half the width of the groove provides a groove with relatively large internal surface area compared with for example a groove with a circular cross-sectional shape. Increased internal surface enables increased distribution of stress over a larger area, such that significantly lower peak stress values can be obtained. This enables in turn reduced manufacturing cost of the heat exchanger because other expensive and complex solutions for handling said non-immediate damage mechanisms, such as non-linear material with hardening or weld deposit.

By the rounded shape of the cross-section of the groove defining a finite curvature radius at the header-to-core joint, a sudden bend at the header-to-core joint is avoided. This will relieve the stress at the header-to-core joint and distribute the stress over a larger area.

In this way, the curvature radius changes smoothly, dispersing the concentration of the stress. To the contrary, using non-continuous shapes, i.e., straight lines, would yield a structural discontinuity, because of a sudden change of the curvature radius (from infinite to a finite radius causing a bend). The stored energy would thereby be dispersed in a narrow band where straight line is tangent to a half-round profile, thereby still generating a sharp peak stress.

By contrast, using a smooth curvature or arc shape, in particular at the location of the header-to-core joint, the same stored energy is distributed over the whole area of one side of the half-round profile. The center of the curvature or arc shape may be at the header-to-core joint or alternatively above or below the header-to-core joint. In relation to stress distribution, the strain (deformation) may be distributed in an advantageous manner between the shell and the flat end, i.e. the peak stress may be moved along the curvature of the groove.

Further advantages are achieved by implementing one or several of the features of the dependent claims.

For example, the cross-section of the groove may have a substantially elliptical shape, or more specifically a substantially semi elliptical or half elliptical shape. An elliptical shape provides both the desired rounded form of the cross-sectional shape of the groove and the relatively large internal surface area of the groove for beneficial distribution of the stress.

Alternatively, the cross-section of the groove may have other specific shapes, such as a substantially parabolical shape or a substantially hyperbolical shape. Below, specific examples relating to the elliptical shape will be discussed, however, it is contemplated that the examples are equally applicable to parabolical and hyperbolical shapes.

The header may be attached around a working fluid inlet or outlet surface of the heat exchanger core, and wherein the groove may be formed in said working fluid inlet or outlet surface. Having the groove formed in the working fluid inlet or outlet surface of the heat exchanger core enables cost-efficient manufacturing of the core.

A center of the elliptical shape of the groove may be located in a range extending from a position corresponding to 25% of a major radius of the elliptical shape below a plane of said inlet or outlet surface to a position corresponding to 25% of the major radius of the elliptical shape above the plane of said inlet or outlet surface, specifically in a range extending from a position corresponding to 10% of a major radius of the elliptical shape below a plane of said inlet or outlet surface to a position corresponding to 10% of the major radius of the elliptical shape above the plane of said inlet or outlet surface, more specifically wherein a center of the elliptical shape of the groove may substantially coincide with the plane of said inlet or outlet surface. An elliptical cross-sectional shape of the groove is desired but a center of the elliptical cross-sectional shape may be offset upwards or downwards from the plane of said inlet or outlet surface. The exact position may depend on the specific circumstances.

A relationship between a major radius and a minor axis of the elliptical shape may be in the range of 0.6 - 1.5, specifically 0.7 - 1.3, and more specifically 0.9 - 1.1. The cross-section of the groove shall have a depth larger than half the width of the groove for increased internal surface in the groove. Increased groove depth with maintained groove width results in further increased internal surface, but at too large depth in relation to width results in a too small radius within the groove, thereby resulting increased peak stress levels again. Hence, a relationship between a major radius and a minor axis of the elliptical shape in the range of 0.6 - 1.5, specifically 0.7 - 1.3, and more specifically 0.9 - 1.1 is deemed to represent an advantageous selection.

A major radius of the elliptical shape may be in the range of 50% - 150%, specifically 75% - 125%, of a thickness of the header wall. The size of the groove is preferably selected to fit the expected stress levels.

The groove may be formed by machining using metal cutting equipment. This process enables a cost-efficient manufacturing of the core.

The groove may extend along at least 50%, specifically at least 75%, more specifically at least 95% of the total length of the header-to-core joint, and most specifically along the entire length of the header-to-core joint. The stress levels at the header-to-core joint depend on many factors, such as form and size of the header. Depending on the specific design of the header, the length of the groove and the location of the groove may be varied. A groove extending along a part of the total length of the header-to-core joint enables reduced manufacturing cost compared with a groove extending along the entire length of the header-to-core joint. An increased length of the groove, i.e. the groove extending along an increased length of the header-to-core joint, reduces the peak stresses along a larger portion of the header-to-core joint and thus the total peak stresses.

A root surface of the welded header-to-core joint may not protrude above a plane of said inlet or outlet surface. This design enables welding of the header-to-core joint without first removing core material within the area enclosed by the header.

The heat exchanger core may be made of a plurality of stacked plates arranged parallel to one another and joined to each other, preferably by solid state welding, brazing, or a combination of these two methods. A stacked plate heat exchanger core can be made very compact and robust, making it advantageous for high-pressure applications.

Each of the first and second heat exchange passages may comprise a plurality of flow conduits extending between a working fluid inlet surface and a working fluid outlet surface of the heat exchanger core. A distribution of the working fluid into a plurality of flow paths through the heat exchanger improves heat exchanger efficiency.

The plurality of flow conduits may be formed by open channels in a side surface of individual stacked plates. Open channels are cost-efficiently manufactured using pressing technique and etching technique of an initially flat plate.

The heat exchanger may be a diffusion-bonded heat exchanger. A diffusion-bonded heat exchanger core can be made very compact and robust, making it advantageous for high-pressure applications.

Each of the working fluid inlet and working fluid outlet surfaces of the first and second heat exchange passages may comprise an individual header welded thereto. An individual header for each inlet and outlet enables a simple and robust header design.

The width of the groove may be defined as the distance along an imaginary line between the header-to-core joint and a most adjacent point on the working fluid inlet or outlet surface, and, the depth of the groove may be defined as the distance between the imaginary line and a most distant point within the cross-section of the groove. The most distant point is regarded as the bottom of the groove.

The rounded shape may define a continuous curvature from the header-to-core joint along at least 10% of the distance from the header-to-core joint towards the most distant point, preferably along at least 20% of the distance from the header-to-core joint towards the most distant point, more preferably along at least 50% of the of the distance from the header-to-core joint towards the most distant point, most preferably the entire distance from the header-to-core joint and the most distant point.

In this way the stress may be further distributed over a large surface within the groove. The most critical part of the groove is the location adjacent the header-to-core joint, and the area located between the header-to-core joint and the bottom of the groove is more critical than the area between the bottom of the groove and the transition between the groove and the working fluid inlet or outlet surface.

Additionally, the continuous curvature may define a decreasing curvature radius from the header-to-core joint towards the depth of the groove. In this way, the curvature radius may form a shape having a bend that is increasingly steeper towards the depth of the groove, such as a substantially semi elliptic shape. In this context, the relation between the depth and the width of the groove may be in the range of 0.6 - 1.5, specifically 0.7 - 1.3, and more specifically 0.9 - 1.1, and/or the depth of the groove may be in the range of 50% - 150%, specifically 75% - 125%, of a thickness of the header wall.

Further areas of applicability will become apparent from the description provided herein.

### BRIEF DESCRIPTION OF DRAWINGS

In the detailed description below reference is made to the following figure, in which:
Figure 1 shows a perspective view of an example embodiment heat exchanger,
Figure 2a shows a side view of an example heat exchanger layout,
Figure 2b shows a side view of a further example heat exchanger layout,
Figure 2c shows a side view of still a further example heat exchanger layout,
Figure 3 shows a perspective view of an example embodiment core,
Figure 4 shows a perspective view of an example embodiment core of figure 3,
Figure 5 shows a magnification of a portion of figure 4,
Figure 6 shows a perspective view of a portion of an example embodiment heat exchanger,
Figure 7 shows a side view of an example embodiment heat exchanger core,
Figure 8 shows a side view of an example embodiment heat exchanger core,
Figure 9 shows a side view of an example embodiment heat exchanger core,
Figure 10 shows a cross-section of an example embodiment groove,
Figure 11 shows a cross-section of an example embodiment groove,
Figure 12 shows a cross-section of an example embodiment groove,
Figure 13 shows a cross-section of an example embodiment groove,
Figure 14 shows a flow chart of the method,
Figure 15 shows a FEM simulation of an example embodiment groove, and
Figure 16 shows a FEM simulation of an example embodiment groove.

### DETAILED DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

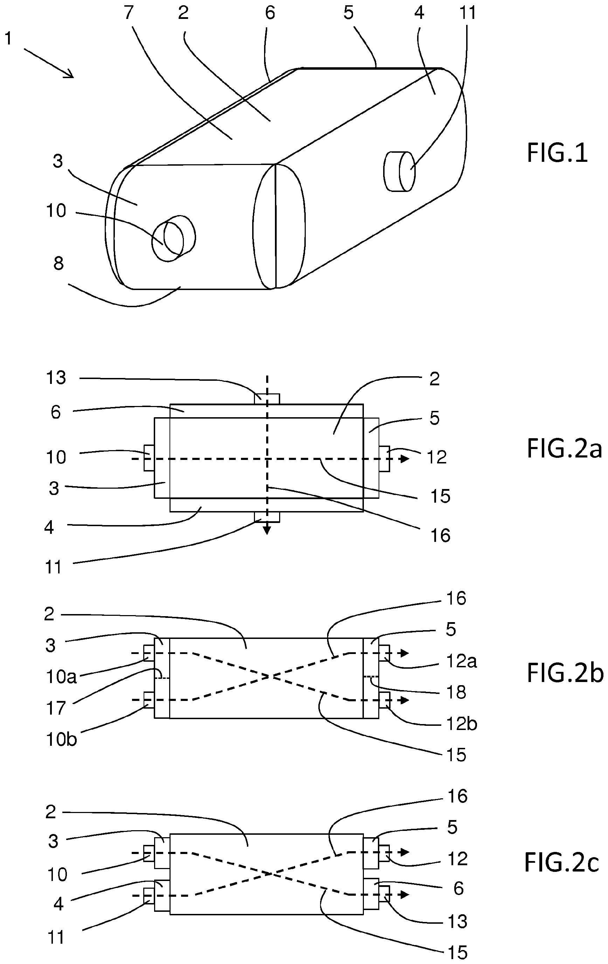

Figure 1 of the drawings schematically shows a perspective view of a heat exchanger according to an example embodiment of the disclosure. The heat exchanger 1 comprises a substantially rectangular heat exchanger core 2 and four headers 3, 4, 5, 6 welded to four individual sides of the core 2, wherein two opposite sides 7, 8 of the core are free from any headers.

The core 2 has a first heat exchange passage for a first working fluid intended to be involved in a heat exchange process, and a second heat exchange passage for a second working fluid intended to be involved in the heat exchange process. The working fluid may be a refrigerant, natural gas, oil, water, a mixture thereof or any desired and suitable fluid and mixture of fluids. The fluid may also comprise additives. The overall aim of the heat exchanger is to transfer heat between one working fluid to another working fluid. As a result, the temperature difference between the working fluid when leaving the heat exchanger is generally lower than the temperature difference between the working fluids when entering the heat exchanger. Each passage may also be denoted stream.

Each header 3, 4, 5, 6 typically serve to convey working fluid between a fluid inlet connection 10 or fluid outlet connection 11 and a hollow space within the header, which space is defined by the internal side surface of the header and the side of the core on which the header is attached. Consequently, the header forms a duct for enabling working fluid flow between a fluid inlet connection 10 or fluid outlet connection 11 and a plurality of flow conduits extending through the core 2 and ending at the side of the core 2.

Figure 2a schematically illustrates the heat exchanger 1 of figure 1 as seen from a side 7 without a header. The core 2 is shown as a rectangular-shaped center piece and four headers 3,4,5,6 are shown attached to individual sides of the core 2. Each header 3,4,5,6 comprises a fluid inlet or outlet connection 10,11,12,13.

The heat exchange passages through the heat exchanger can vary to a large extent. For example, according to the example embodiment of figure 2a, the heat exchanger has a first heat exchange passage 15 for a first working extending from a first header 3 on one side of the core 2 to a second header 5 on an opposite side of the core 2, and a second heat exchange passage 16 for a second working fluid extending from a third header 6 on one side of the core 2 to a fourth header 4 on an opposite side of the core 2, wherein the first and second heat exchange passages 15, 16 has crossing flow conduits within the core 1. In this example embodiment, each header comprises a single duct for conveying working fluid to or from one of the first and second heat exchange passages.

Figure 2b shows an alternative example embodiment of a heat exchanger having only two headers 3, 5 attached to opposite sides of the core 2. Moreover, each header 3, 5 has an internal partition wall 17, 18 defining two ducts within each header 3, 5, and one individual fluid connection 10a, 10b, 12a, 12b associated with each duct. The heat exchanger 1 has a first heat exchange passage 15 for a first working fluid extending from a first fluid connection 10a, via a first duct of the first header 3 on one side of the core 2 to a second fluid connection 12b, via a second duct of the second header 5 on an opposite side of the core 2. The heat exchanger 1 further has a second heat exchange passage 16 for a second working fluid extending from a second fluid connection 10b, via a second duct of the first header 3 on one side of the core 2 to a first fluid connection 12a, via a first duct of the second header 5 on an opposite side of the core 2. Here, each header comprises two ducts for conveying working fluids to or from both the first and second heat exchange passages. The heat exchanger may thus have a plurality of fluid connections on a single side of the core 2, and the header may have a plurality of ducts conveying different types of working fluid in any direction.

Figure 2c shows still an alternative example embodiment of a heat exchanger having four headers 3, 4, 5, 6 attached to two opposite sides of the core 2. Each header 3, 4, 5, 6 defines a single duct. The heat exchanger 1 has a first heat exchange passage 15 for a first working fluid extending from a first fluid connection 10 of a first header 3 on one side of the core 2 to a second fluid connection 13 of a second header 6 on an opposite side of the core 2. The heat exchanger 1 further has a second heat exchange passage 16 for a second working fluid extending from a third fluid connection 11 of a third header 3 located on the same side as the first header 3 to a fourth fluid connection 12 of a fourth header 5 located on the same side as the second header 6. Here, each header comprises a single duct for conveying working fluids to or from one of the first and second heat exchange passages.

Many more heat exchange layouts are possible within the scope of the appended claims, wherein the heat exchanger comprises at least one header for conveying working fluid to and/or from core.

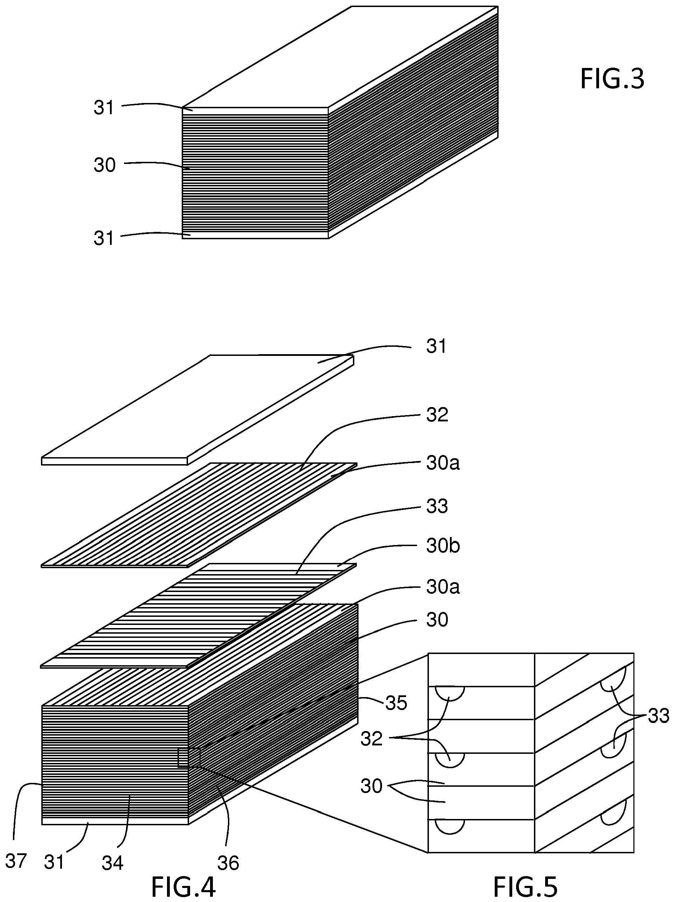

As illustrated in figure 3, the heat exchanger core 2 may according to an example embodiment of the disclosure be made of a plurality of stacked plates 30 arranged parallel to one another and joined to each other by solid state welding, brazing, or combination of these two methods. Two oppositely arranged endplates 31 form the ends of the stack. The plates 30 are typically made of steel, stainless steel, or a suitable metal alloy. The plates 30 are joined together at their contact surfaces to form a substantially integral single-piece solid metal core that is highly robust and strong. The heat exchanger core consequently can be said to be manufactured from a plurality of plates, but the finished core more resembles a solid metal block having channels therein.

Diffusion bonding can for example be performed by pressing the plates together in high temperature condition, thereby generating metal grain growth between the upper and lower surfaces of each plate. Alternatively, or on combination with the solid state welding, the plurality of stacked plates 30 arranged parallel to one another may be joined to each other by brazing, which involves placing filler material, for example copper or nickel, between each plate 30 in the stack, and then vacuum-brazing with copper or nickel.

Figure 4 schematically shows the composition of a stack of plates forming the core of an example embodiment heat exchanger having two different types of plates 30 which are alternatingly placed in the stack. A first group of plates 30a comprises longitudinally extending channels 32 that extend between a first pair of opposite sides 34, 35 of the core 2, and a second group of plates 30b comprises transversely extending channels 33 that extend between a second pair of opposite sides 36, 37 of the core 2. The channels 32 may run substantially straight from one side of the core to an opposite side of the core, as shown in figure 4, but many variations are of course possible, such as curved paths, zig-zag paths, etc.

The channels 32, 33 may for example be formed by chemical etching, which is commonly known as printed circuit heat exchanger (PCHE). Alternatively, channels may be formed in metal plates by means of pressing a plate in a pressing die having projections that form grooves or channels in the plate.

Figure 5 shows a magnified view of a corner section of the example plate stack of figure 4, wherein the plates 30a, 30b of the first and second groups of plates are placed alternatingly. The interaction of neighboring plates form flow conduits through the core, as shown in figure 5, where open channels 32, 33 in one plate interact with the neighboring upper plate to close said open channels and form closed flow conduits. Many alternative designs are possible, such as having an open channel in one plate facing an open channel in a neighboring plate to form a closed flow conduit, or the like.

In the embodiment of fig. 3 and 4, the channels 32, 33 extend all the way to the opposite edges of each plate 30. After stacking of the plates 30 the edges of all plates 30 defines the sides 34, 35, 36, 37 of the core 2, such that the sides of the stack not covered by endplates 31 define inlet or outlet surfaces of the plurality of flow conduits. Consequently, each of the first and second heat exchange passages in the heat exchanger core 2 of figure 3 and 4 comprises a plurality of flow conduits extending between a working fluid inlet surface and a working fluid outlet surface of the heat exchanger core 2.

The heat exchanger is specifically arranged for withstanding very high pressure and high temperature working fluid. For this reason the at least one header of the heat exchanger 1 is welded to the heat exchanger core along a header-to-core joint. The header is welded along its entire peripheral contact surface with a side of the core. Significant stress may arise along the header-to-core joints of a heat exchanger due to localized bending. One cost-efficient approach for reducing high peak stress at the header-to-core joint is to provide the heat exchanger core with a groove extending at least partly along the header-to-core joint.

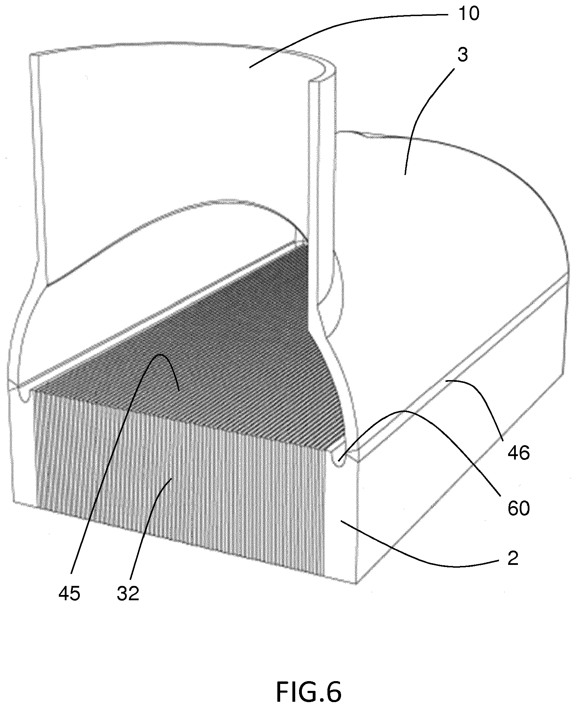

Figure 6 shows a sectional perspective view of a portion of a heat exchanger according to an example embodiment of the disclosure. The heat exchanger comprises a header 3 welded to a core 2 along a header-to-core joint 46, wherein the header 3 comprises a fluid inlet or outlet connection 10. The illustrated core 2 has a plurality of channels 32 extending through the core 2 between a working fluid inlet or outlet surface 45. A groove 60 is formed in the working fluid inlet or outlet surface 45 along the entire header-to-core joint 46. By avoiding sharp corners at the header-to-core joint 46 peak stresses are reduced. Consequently, the cross-section of the groove 60 has a rounded shape instead. Moreover, by selecting a cross-section of the groove 60 having a depth of the groove that is larger than half the width of the groove, a relatively large internal surface is provided within the groove 60, thereby enabling further reduced peak stresses.

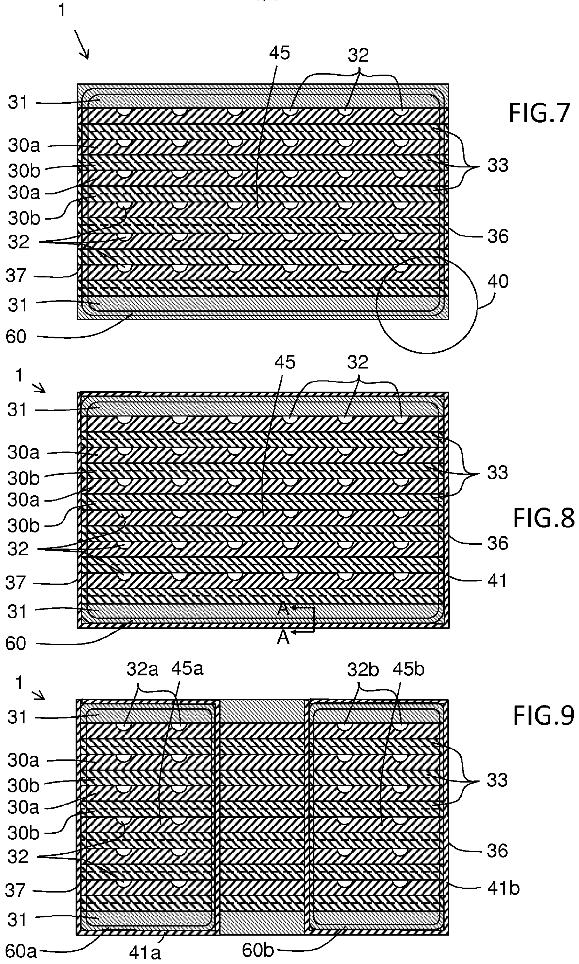

Figure 7 schematically illustrates a side view of an example embodiment of the core 2 having a plurality of alternatingly stacked plates 30a, 30b from a first and second group of plates, and two endplates 31 located on opposite sides of the core 2. A first group of plates 30a have a plurality of channels 32 formed therein, enabling access to the flow conduits from the front side. A second group of plates 30b having a plurality of channels 33 formed therein. The illustrated core surface having opening to the channels 32 defines a working fluid inlet or outlet surface 45 of the heat exchanger core 2.

At a suitable step in the manufacturing process, after assembly of the plates to a core, the groove is formed along an intended root surface of the welded header-to-core joint. The groove may advantageously be machined using metal cutting equipment, such as milling. In the embodiment of figure 7 the groove extends along the entire length of the intended header-to-core joint, however, shorter segments of groove along the header-to-core joint may be used in certain situation. For example, the groove may possibly be omitted in the corner areas 40 of the header-to-core joint. In all, the groove may extend along at least 50%, specifically at least 75%, more specifically at least 95% of the total length of the header-to-core joint, and most specifically along the entire length of the header-to-core joint. The groove may extend at least at the middle of one of the sides of the header-to-core joint, i.e. in the region halfway between the corner areas 40, and/or at the portions of the header-to-core joint being closest to the inlet or outlet connection 10,11,12,13, where the peak stresses are most significant. Usually, the inlet or outlet connection 10,11,12,13 is located at the center of the header 3,4,5,6 and thus the middle of the side of the header-to-core joint and the portion closest to the inlet or outlet connection is the same. In case of a rectangular inlet or outlet surface, the groove may be present at least at the longsides of the header-to-core joint. On the sides of the header-to-core joint where the groove is present, the groove may extend along a length that is at least equal to a diameter of the inlet or outlet connection.

Figure 8 corresponds to figure 7 but additionally with the root surface 41 of the welded header-to-core joint illustrated as a hatched area. This figure illustrates that the groove is located on an inside of, and substantially flush with, the header-to-core joint. Consequently, in a finished state of the heat exchanger 1, the header 3, 4, 5, 6 is attached around a working fluid inlet or outlet surface of the heat exchanger core 2 and the groove 60 is formed in said working fluid inlet or outlet surface 45.

Figure 9 schematically shows an alternative embodiment having substantially identical core structure as the example embodiment of figure 8, but with two working fluid inlet or outlet surfaces 45a, 45b formed in the single shown core surface. Each working fluid inlet or outlet surface 45a, 45b has an individual header attached along a root surface 41a, 41b of a welded header-to-core joint around the working fluid inlet or outlet surface 45a, 45b of the heat exchanger core 2. This corresponds to a heat exchanger as shown in figure 2c.

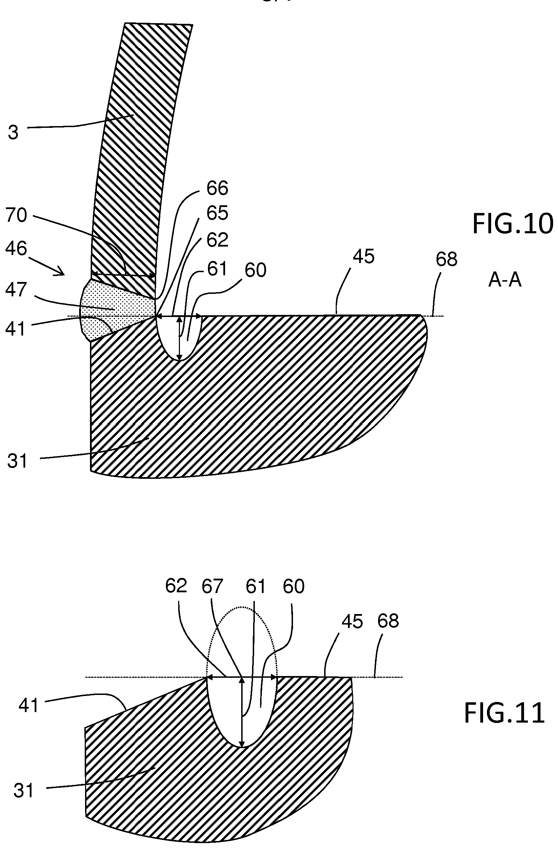

Figure 10 schematically illustrates a section along cut A-A of figure 8 for the purpose of more clearly illustrating the cross-sectional shape of the groove 60, and its position relative to the root surface 41 of the welded header-to-core joint 46. The lower part shown in figure 10 corresponds to an endplate 31 of the core 2, and the upper part corresponds to a side wall of the header 3, which is welded around a working fluid inlet or outlet surface 45 of the heat exchanger core 2 by means of a weld 47 to form the header-to-core joint 46.

The cross-section of the groove has a rounded shape, i.e. a shape free from sharp corners. The cross-section of the groove has a depth 61 that is larger than half the width 62 of the groove 60. This is advantageous because it provides a groove with relatively large surface area while still avoiding sharp corners. The large surface area results in reduced stress because the stress can be better distributed over the surface, and the sharp corners may result in stress concentration.

According to the example embodiment of figure 10 the cross-section of the groove 60 has a substantially elliptical shape. This means that the groove follows part of a shape resembling an ellipse. In the disclosed example the groove substantially follows half of an ellipse, i.e. having a substantially semi-elliptical shape. The cross-section of the groove 60 may diverge slightly from a pure elliptical shape. For example, the cross-sectional elliptic shape of the groove may approximated by few, such as about 3 to 6 or about 4 to 5 segments (arcs) of a circle, or a b-spline, or a series of curves.

The table below shows the results of simulations made in various types of welded header-to-core joints, wherein the result shows the maximum values of equivalent (van Mises) stress occurring on an internal surface of the header-to-core 46 joint in a transition area between header 3 and core 2. The maximum values of equivalent (van Mises) stress may also be referred to as peak stress.

| Welded header-to-core joint | Maximum equivalent (von Mises) stress |
|---|---|
| Groove-less | 4.0 * 10⁸ Pascal |
| Groove with semi-circular shape | 3.8 * 10⁸ Pascal |
| Groove with semi-elliptical shape | 3.0 * 10⁸ Pascal |

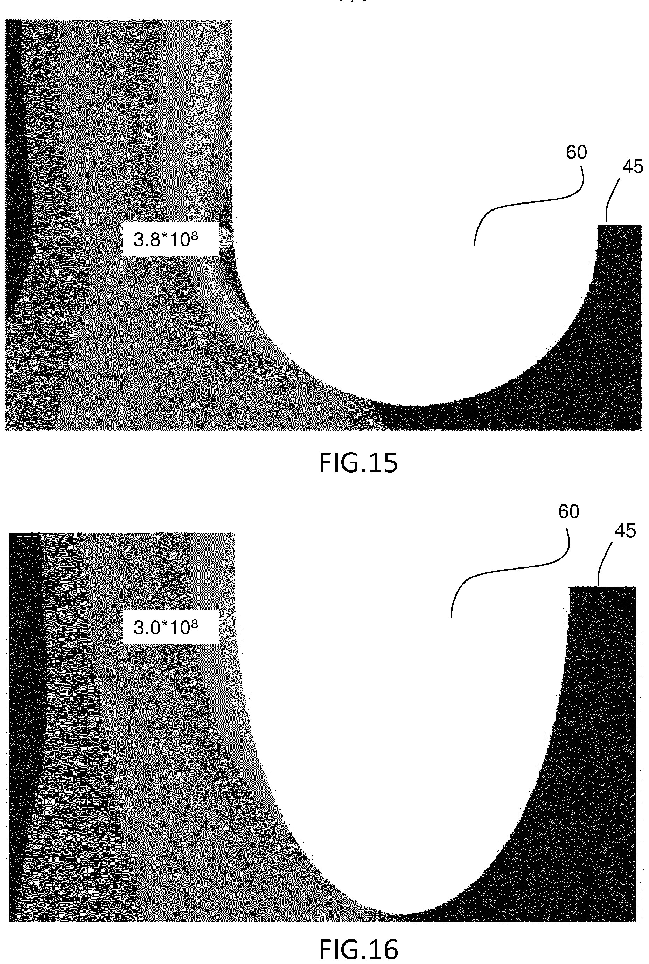

The stress applied in the area of the header-to-core joint in the simulations is visualized in figures 15 and 16. Figure 15 shows the simulation results using a groove 60 having a rounded shape with a depth of the groove corresponding to half the width of the groove. Figure 16 shows the simulation results using a groove 60 of similar width having a rounded shape with a depth of the groove being larger than half the width of the groove in the form of a groove having a semi-elliptical shape. Referring to the above table, the maximum stress using the deep groove is reduced by over 20% compared to the shallow groove.

A groove-less header-to-core joint is formed by simply welding the header wall to the flat surface of the core, such that a right-angle corner is formed. The simulation result confirms that a header-to-core joint 46 having a groove 60 with semi-elliptical cross-sectional shape has substantially lower maximal peak stress than a header-to-core joint having a groove 60 with a semi-circular cross-sectional shape. The result is also a strong indicator that a header-to-core joint 46 having a groove 60 with rounded cross-section and a depth 61 of the groove larger than half the width 62 of the groove 60 also exhibits a lower maximal peak stress than a header-to-core joint having a groove 60 with a semi-circular cross-sectional shape.

A relationship between a major radius (depth 61 of groove 60) and a minor axis (width 62 of the groove 60) of the elliptical shape may for example be set in the range of 0.6 - 1.5, specifically 0.7 - 1.3, and more specifically 0.9 - 1.1. The following table of stress simulations of a modelled heat exchanger with a welded header-to-core joint and elliptical groove confirms that a relationship around 1.0 generally may be deemed advantageous (e1=width of groove; e2=depth of groove):

| e1\e2 | 10 | 12 | 14 | 16 | 18 | 20 | 22 | 24 | 26 | 28 | 30 |
|---|---|---|---|---|---|---|---|---|---|---|---|
| 10 | 508,8 | 521,8 | 535 | 556,9 | 574,5 | 575 | 592,3 | 719,1 | 738,3 | 696,4 | 735,4 |
| 12 | 469,9 | 463,4 | 482,7 | 505,7 | 550,4 | 510,3 | 546,1 | 614,7 | 646,7 | 674,9 | 635,1 |
| 14 | 481,4 | 445,9 | 431,4 | 447,9 | 470,2 | 495,1 | 520,2 | 540 | 575,6 | 573,5 | 593,5 |
| 16 | 494,4 | 382 | 382 | 382 | 420,1 | 440,7 | 382 | 483,9 | 382 | 522,6 | 541,2 |
| 18 | 503,4 | 462,6 | 431,3 | 408,2 | 390,1 | 401,5 | 421,4 | 432 | 460,5 | 476,3 | 485,1 |
| 20 | 515,8 | 470,8 | 439,7 | 415,2 | 396,1 | 382 | 382,7 | 403,3 | 412,3 | 422 | 447,2 |
| 22 | 525,4 | 479,4 | 446,7 | 421,2 | 402,7 | 386,7 | 375,2 | 371 | 380,7 | 391,5 | 401,7 |
| 24 | 533,1 | 490 | 454 | 428,5 | 408,1 | 392,3 | 380,4 | 369,4 | 361 | 366,3 | 373,1 |
| 26 | 542. | 498,1 | 462,8 | 435 | 413,5 | 399,1 | 384,3 | 373,5 | 364,4 | 357,3 | 351,1 |
| 28 | 550,2 | 506 | 468,9 | 440,3 | 419,7 | 402,7 | 389,1 | 378,1 | 368,8 | 360,7 | 353,9 |
| 30 | 558,4 | 510,3 | 473,4 | 446,8 | 425,8 | 407,1 | 394 | 382,7 | 372,1 | 364,5 | 358 |

An advantage of simply providing a groove 60 in the working fluid inlet or outlet surface 45 of the heat exchanger core 2 is that a butt welded header-to-core joint 46 may be accomplished without having to lower the working fluid inlet or outlet surface 45, for example by machining, because the root surface 41 of the welded header-to-core joint 46 does not protrude above a plane of said inlet or outlet surface 45. This means that a butt welded header-to-core joint 46 can be finished merely by means of the groove.

The groove is preferably located so that an outer peripheral edge 65 of the groove 60 substantially coincides with the interior edge 66 of the header wall after assembly and fastening of the header to the core 2 for enabling a flush transition between the header 4 and groove 60.

The depth and width of the groove is preferably selected in accordance with the wall thickness of the header, i.e. the thickness of a wall of the header next to the header-to-core joint. For example, a major radius 61 of the elliptical shape may be set in the range of 50% - 150%, specifically 75% - 125%, of a thickness 70 of the header wall in the area of the header-to-core joint 46. The thickness of the header wall is typically in the range of 5 to 75 millimeters. Thus, alternatively, in terms of absolute numbers, the major radius of the elliptical shape may be set in the range of 2.5 - 112.5 millimeters, specifically in the range of 5 - 100 millimeters, more specifically in the range of 10 - 75 millimeters.

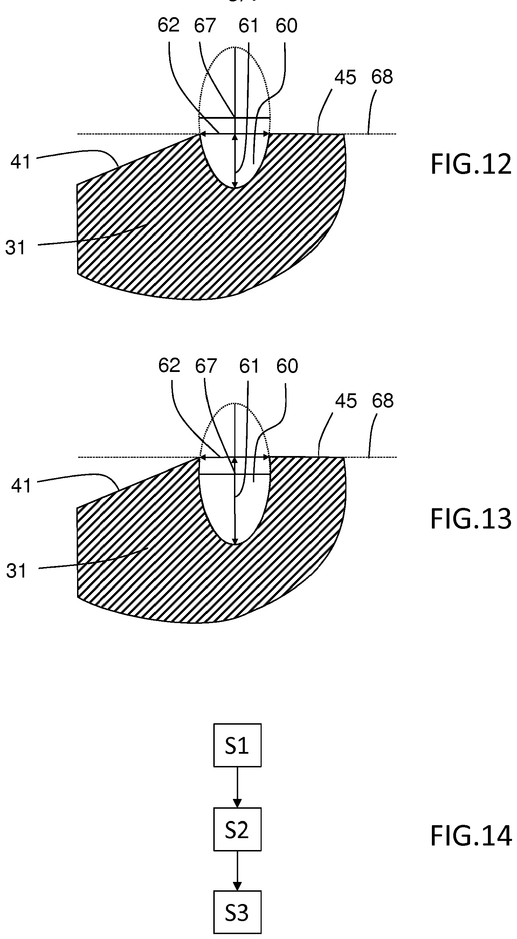

As illustrated in figure 11, a center 67 of the substantially elliptical shape of the groove 60 may according to an example embodiment be set to substantially coincide with a plane 68 of said inlet or outlet surface 45. However, the groove 60 may be made more or less shallow. A more shallow elliptical-shaped groove 60 is shown in the example embodiment of figure 12, wherein the center 67 of the substantially elliptical shape of the groove 60 is located a distance corresponding to about 25% of the major radius of the elliptical shape above the plane 68 of said inlet or outlet surface 45. Moreover, a less shallow elliptical-shaped groove 60 is shown in the example embodiment of figure 13, wherein the center 67 of the substantially elliptical shape of the groove 60 is located a distance corresponding to about 25% of the major radius of the elliptical shape below the plane 68 of said inlet or outlet surface 45. Thus, a center of the elliptical shape of the groove may be located in a range extending from a position corresponding to 25% of a major radius of the elliptical shape below a plane of said inlet or outlet surface to a position corresponding to 25% of the major radius of the elliptical shape above the plane of said inlet or outlet surface, specifically in a range extending from a position corresponding to 10% of a major radius of the elliptical shape below a plane of said inlet or outlet surface to a position corresponding to 10% of the major radius of the elliptical shape above the plane of said inlet or outlet surface.

The disclosure also relates to a method for manufacturing a heat exchanger 1 comprising a heat exchanger core 2 having a plurality of heat exchange passages and a header 3, 4, 5, 6 for conveying working fluid to or from the plurality of heat exchange passages. The method comprises the following steps S1-S3, which is also illustrated in figure 14. The method comprises:
S1) Providing a heat exchanger core 2. This may involve manufacturing metal plates 30, 30a, 30b with integral channels 32, 33, for example by chemical etching or pressing, and subsequently joining the plates by solid state welding and/or brazing to form a solid single-piece core having integral flow conduits.
S2) Machining a groove 60 in the heat exchanger core 2 at least partly along an intended header-to-core joint 46, wherein a cross-section of the groove 60 has a rounded shape with a depth of the groove larger than half the width of the groove.
S3) Welding the header 3, 4, 5, 6 to the heat exchanger core 2 to form said header-to-core joint 46.

Reference signs mentioned in the claims should not be seen as limiting the extent of the matter protected by the claims, and their sole function is to make claims easier to understand.

The present invention may be embodied in other specific forms without departing from the scope of the claims. It is appreciated that various features of the above-described examples can be mixed and matched to form a variety of other alternatives. As such, the described embodiments are to be considered in all respects only as illustrative and not restrictive. The scope of the invention is, therefore, indicated by the appended claims rather than by the foregoing description. All changes that come within the meaning and range of equivalency of the claims are to be included within their scope.

## Claims

1. A heat exchanger (1) comprising:
a heat exchanger core (2) having a first heat exchange passage for a first working fluid intended to be involved in a heat exchange process, and a second heat exchange passage for a second working fluid intended to be involved in the heat exchange process; and
a header (3, 4, 5, 6) comprising a duct for conveying working fluid to or from at least one of the first and second heat exchange passages, wherein the header (3, 4, 5, 6) being welded to the heat exchanger core (2) along a header-to-core joint (46),
wherein the heat exchanger core (2) has a groove (60, 60a, 60b) extending at least partly along the header-to-core joint (46), wherein a cross-section of the groove (60, 60a, 60b) has a rounded shape
**characterized in that** a depth (61) of the groove (60, 60a, 60b) is larger than half the width (62) of the groove (60, 60a, 60b) and the rounded shape of the cross-section of the groove (60) defines a finite curvature radius at the header-to-core joint (46).

2. The heat exchanger according to claim 1, wherein the header (3, 4, 5, 6) is attached around a working fluid inlet or outlet surface (45, 45a, 45b) of the heat exchanger core (2), and wherein the groove (60, 60a, 60b) is formed in said working fluid inlet or outlet surface (45, 45a, 45b).

3. The heat exchanger according to any of the claims 1 to 2, wherein a cross-section of the groove (60) has a specific shape being one of a substantially elliptical shape, a substantially parabolical shape or a substantially hyperbolical shape.

4. The heat exchanger according to claim 3, wherein the specific shape is an elliptical shape and a center (67) of the elliptical shape of the groove (60, 60a, 60b) is located in a range extending from a position corresponding to 25% of a major radius of the elliptical shape below a plane (68) of said inlet or outlet surface (45, 45a, 45b) to a position corresponding to 25% of the major radius of the elliptical shape above the plane (68) of said inlet or outlet surface, specifically wherein a center (67) of the elliptical shape of the groove (60, 60a, 60b) substantially coincides with the plane (68) of said inlet or outlet surface (45, 45a, 45b).

5. The heat exchanger according to any of claims 3 to 4, wherein the specific shape is an elliptical shape and a relationship between a major radius and a minor axis of the elliptical shape is in the range of 0.6 - 1.5, specifically 0.7 - 1.3, and more specifically 0.9 - 1.1.

6. The heat exchanger according to any of claims 3 to 5, wherein the specific shape is an elliptical shape and a major radius of the elliptical shape is in the range of 50% - 150%, specifically 75% - 125%, of a thickness (70) of the header wall.

7. The heat exchanger according to any of claims 1 to 6, wherein the groove (60, 60a, 60b) is formed by machining using metal cutting equipment.

8. The heat exchanger according to any of claims 1 to 7, wherein the groove (60, 60a, 60b) extends along at least 50%, specifically at least 75%, more specifically at least 95% of the total length of the header-to-core joint (46), and most specifically along the entire length of the header-to-core joint (46).

9. The heat exchanger according to any of claims 2 to 8, wherein a root surface (41) of the welded header-to-core joint (46) does not protrude above a plane (68) of said inlet or outlet surface (45, 45a, 45b).

10. The heat exchanger according to any of claims 1 to 9, wherein the heat exchanger core (2) is made of a plurality of stacked plates (30, 30a, 30b) arranged parallel to one another and joined to each other, preferably by solid state welding, brazing, or a combination of these two methods.

11. The heat exchanger according to any of claims 1-10, wherein each of the first and second heat exchange passages comprises a plurality of flow conduits extending between a working fluid inlet surface (45, 45a, 45b) and a working fluid outlet surface (45, 45a, 45b) of the heat exchanger core (2).

12. The heat exchanger according to claim 11, wherein the plurality of flow conduits are formed by open channels (32, 33) in a side surface of individual stacked plates (30, 30a, 30b).

13. The heat exchanger according to any of claims 1 to 12, wherein the heat exchanger (1) is a diffusion-bonded heat exchanger.

14. The heat exchanger according to any of claims 3 to 13, wherein each of the working fluid inlet and working fluid outlet surfaces (45, 45a, 45b) of the first and second heat exchange passages comprises an individual header (3, 4, 5, 6) welded thereto.

15. The heat exchanger according to any of the claims 2-14, wherein the width (62) of the groove is defined as the distance along an imaginary line between the header-to-core joint (46) and a most adjacent point on the working fluid inlet or outlet surface (45), and, the depth (61) of the groove is defined as the distance between the imaginary line and a most distant point within the cross-section of the groove (60),

16. The heat exchanger according to claim 15, wherein the rounded shape defines a continuous curvature from the header-to-core joint (46) along at least 10% of the distance from the header-to-core joint (46) towards the most distant point, preferably along at least 20% of the distance from the header-to-core joint (46) towards the most distant point, more preferably along at least 50% of the of the distance from the header-to-core joint (46) towards the most distant point, most preferably the entire distance from the header-to-core joint (46) and the most distant point.

17. The heat exchanger according to claims 16, wherein the continuous curvature defines a decreasing curvature radius from the header-to-core joint (46) towards the most distant point of the groove (60, 60a, 60b).

18. The heat exchanger according to any of the preceding claims, wherein a relationship between the depth (61) and the width (62) of the groove (60, 60a, 60b) is in the range of 0.6 - 1.5, specifically 0.7 - 1.3, and more specifically 0.9 - 1.1.

19. The heat exchanger according to any of the preceding claims, wherein the depth (61) of the groove is in the range of 50% - 150%, specifically 75% - 125%, of a thickness (70) of the header wall.

20. A method for manufacturing a heat exchanger (1) comprising a heat exchanger core (2) having a plurality of heat exchange passages and a header (3, 4, 5, 6) for conveying working fluid to or from the plurality of heat exchange passages, the method comprises
providing a heat exchanger core (2);
machining a groove (60, 60a, 60b) in the heat exchanger core (2) at least partly along an intended header-to-core joint (46), wherein a cross-section of the groove (60, 60a, 60b) has a rounded shape,
welding the header (3, 4, 5, 6) to the heat exchanger core (2) to form said header-to-core joint (46),
**characterized in that** a depth (61) of the groove (60, 60a, 60b) is larger than half the width (62) of the groove (60, 60a, 60b) and the rounded shape of the cross-section of the groove (60) defines a finite curvature radius at the header-to-core joint (46).

## Patentansprüche

1. Wärmetauscher (1) umfassend:
einen Wärmetauscherkern (2) mit einem ersten Wärmetauschkanal für ein erstes Arbeitsfluid, das dafür vorgesehen ist, in einen Wärmetauschprozess einbezogen zu werden, und einem zweiten Wärmetauschkanal für ein zweites Arbeitsfluid, das dafür vorgesehen ist, in den Wärmetauschprozess einbezogen zu werden; und
einen Sammler (3, 4, 5, 6), der eine Leitung zum Zuführen von Arbeitsfluid zu oder von mindestens einem des ersten und des zweiten Wärmetauschkanals umfasst, wobei der Sammler (3, 4, 5, 6) mit dem Wärmetauscherkern (2) entlang einer Sammler-Kern-Naht (46) verschweißt ist,
wobei der Wärmetauscherkern (2) eine Nut (60, 60a, 60b) aufweist, die sich mindestens teilweise entlang der Sammler-Kern-Naht (46) erstreckt, wobei ein Querschnitt der Nut (60, 60a, 60b) eine abgerundete Form aufweist,
**dadurch gekennzeichnet, dass** eine Tiefe (61) der Nut (60, 60a, 60b) größer als die halbe Breite (62) der Nut (60, 60a, 60b) ist und die abgerundete Form des Querschnitts der Nut (60) einen endlichen Krümmungsradius an der Sammler-Kern-Naht (46) definiert.

2. Wärmetauscher nach Anspruch 1, wobei der Sammler (3, 4, 5, 6) um eine Arbeitsfluideinlass- oder -auslassfläche (45, 45a, 45b) des Wärmetauscherkerns (2) herum angebracht ist und wobei die Nut (60, 60a, 60b) in der Arbeitsfluideinlass- oder -auslassfläche (45, 45a, 45b) ausgebildet ist.

3. Wärmetauscher nach einem der Ansprüche 1 bis 2, wobei ein Querschnitt der Nut (60) eine spezifische Form hat, die eines von einer im Wesentlichen elliptischen Form, einer im Wesentlichen parabolischen Form oder einer im Wesentlichen hyperbolischen Form ist.

4. Wärmetauscher nach Anspruch 3, wobei die spezifische Form eine elliptische Form ist und ein Mittelpunkt (67) der elliptischen Form der Nut (60, 60a, 60b) sich in einem Bereich befindet, der sich von einer Position, die 25% eines Hauptradius der elliptischen Form unterhalb einer Ebene (68) der Einlass- oder Auslassfläche (45, 45a, 45b) entspricht, bis zu einer Position erstreckt, die 25% des Hauptradius der elliptischen Form oberhalb der Ebene (68) der Einlass- oder Auslassfläche entspricht, insbesondere wobei ein Mittelpunkt (67) der elliptischen Form der Nut (60, 60a, 60b) im Wesentlichen mit der Ebene (68) der Einlass- oder Auslassfläche (45, 45a, 45b) zusammenfällt.

5. Wärmetauscher nach einem der Ansprüche 3 bis 4, wobei die spezifische Form eine elliptische Form ist und eine Beziehung zwischen einem Hauptradius und einer Nebenachse der elliptischen Form im Bereich von 0,6 - 1,5 liegt, insbesondere 0,7 - 1,3, und hierbei insbesondere 0,9 - 1,1.

6. Wärmetauscher nach einem der Ansprüche 3 bis 5, wobei die spezifische Form eine elliptische Form ist und ein Hauptradius der elliptischen Form im Bereich von 50% - 150%, insbesondere 75% - 125%, einer Dicke (70) der Sammlerwand liegt.

7. Wärmetauscher nach einem der Ansprüche 1 bis 6, wobei die Nut (60, 60a, 60b) durch spanende Bearbeitung unter Verwendung einer Metallschneidevorrichtung gebildet ist.

8. Wärmetauscher nach einem der Ansprüche 1 bis 7, wobei die Nut (60, 60a, 60b) sich entlang mindestens 50%, insbesondere mindestens 75%, hierbei insbesondere mindestens 95% der Gesamtlänge der Sammler-Kern-Naht (46), und ganz besonders entlang der gesamten Länge der Sammler-Kern-Naht (46) erstreckt.

9. Wärmetauscher nach einem der Ansprüche 2 bis 8, wobei eine Fußmantelfläche (41) der geschweißten Sammler-Kern-Naht (46) nicht über eine Ebene (68) der Einlass- oder Auslassfläche (45, 45a, 45b) herausragt.

10. Wärmetauscher nach einem der Ansprüche 1 bis 9, wobei der Wärmetauscherkern (2) aus einer Vielzahl von gestapelten Platten (30, 30a, 30b) besteht, die parallel zueinander angeordnet und miteinander verbunden sind, vorzugsweise durch Festkörperschweißen, Hartlöten oder eine Kombination dieser beiden Verfahren.

11. Wärmetauscher nach einem der Ansprüche 1 bis 10, wobei jeder des ersten und des zweiten Wärmetauscherkanals eine Vielzahl von Strömungskanälen umfasst, die sich zwischen einer Arbeitsfluideinlassfläche (45, 45a, 45b) und einer Arbeitsfluidauslassfläche (45, 45a, 45b) des Wärmetauscherkerns (2) erstrecken.

12. Wärmetauscher nach Anspruch 11, wobei die Vielzahl von Strömungskanälen durch offene Kanäle (32, 33) in einer Seitenfläche von einzelnen gestapelten Platten (30, 30a, 30b) gebildet wird.

13. Wärmetauscher nach einem der Ansprüche 1 bis 12, wobei der Wärmetauscher (1) ein diffusionsgeschweißter Wärmetauscher ist.

14. Wärmetauscher nach einem der Ansprüche 3 bis 13, wobei jede der Arbeitsfluideinlass- und Arbeitsfluidauslassflächen (45, 45a, 45b) des ersten und des zweiten Wärmetauschkanals einen einzelnen Sammler (3, 4, 5, 6) umfasst, der daran angeschweißt ist.

15. Wärmetauscher nach einem der Ansprüche 2 bis 14, wobei die Breite (62) der Nut als der Abstand entlang einer imaginären Linie zwischen der Sammler-Kern-Naht (46) und einem am nächsten liegenden Punkt auf der Arbeitsfluideinlass- oder -auslassfläche (45) definiert ist, und die Tiefe (61) der Nut als der Abstand zwischen der imaginären Linie und einem am weitesten entfernten Punkt innerhalb des Querschnitts der Nut (60) definiert ist,

16. Wärmetauscher nach Anspruch 15, wobei die abgerundete Form eine kontinuierliche Krümmung von der Sammler-Kern-Naht (46) entlang von mindestens 10% des Abstands von der Sammler-Kern-Naht (46) bis zu dem am weitesten entfernten Punkt definiert, vorzugsweise entlang von mindestens 20% des Abstands von der Sammler-Kern-Naht (46) bis zu dem am weitesten entfernten Punkt, besonders bevorzugt entlang von mindestens 50% des Abstands von der Sammler-Kern-Naht (46) bis zu dem am weitesten entfernten Punkt, am meisten bevorzugt entlang des gesamten Abstands von der Sammler-Kern-Naht (46) und dem am weitesten entfernten Punkt.

17. Wärmetauscher nach Anspruch 16, wobei die kontinuierliche Krümmung einen abnehmenden Krümmungsradius von der Sammler-Kern-Naht (46) zu dem am weitesten entfernten Punkt der Nut (60, 60a, 60b) hin definiert.

18. Wärmetauscher nach einem der vorhergehenden Ansprüche, wobei ein Verhältnis zwischen der Tiefe (61) und der Breite (62) der Nut (60, 60a, 60b) im Bereich von 0,6 - 1,5 liegt, insbesondere 0,7 - 1,3, und hierbei insbesondere 0,9 - 1,1.

19. Wärmetauscher nach einem der vorhergehenden Ansprüche, wobei die Tiefe (61) der Nut im Bereich von 50% - 150%, insbesondere 75% - 125%, einer Dicke (70) der Sammlerwand liegt.

20. Verfahren zur Herstellung eines Wärmetauschers (1), der einen Wärmetauscherkern (2) mit einer Vielzahl von Wärmetauscherkanälen und einen Sammler (3, 4, 5, 6) zum Fördern von Arbeitsfluid zu oder von der Vielzahl von Wärmetauscherkanälen umfasst, wobei das Verfahren umfasst:
Bereitstellen eines Wärmetauscherkerns (2);
spanendes Bearbeiten einer Nut (60, 60a, 60b) im Wärmetauscherkern (2) mindestens teilweise entlang einer vorgesehenen Sammler-Kern-Naht (46), wobei ein Querschnitt der Nut (60, 60a, 60b) eine abgerundete Form aufweist,
Verschweißen des Sammlers (3, 4, 5, 6) mit dem Wärmetauscherkern (2), um die Sammler-Kern-Naht (46) zu bilden,
**dadurch gekennzeichnet, dass** eine Tiefe (61) der Nut (60, 60a, 60b) größer als die Hälfte der Breite (62) der Nut (60, 60a, 60b) ist und die abgerundete Form des Querschnitts der Nut (60) einen endlichen Krümmungsradius an der Sammler-Kern-Naht (46) definiert.

## Revendications

1. Échangeur de chaleur (1) comprenant :
un cœur d'échangeur de chaleur (2) qui comporte un premier passage d'échange de chaleur pour un premier fluide de travail qui est destiné à être mis en jeu lors d'un processus d'échange de chaleur et un second passage d'échange de chaleur pour un second fluide de travail qui est destiné à être mis enjeu lors du processus d'échange de chaleur ; et
un collecteur (3, 4, 5, 6) qui comprend un conduit pour convoyer le fluide de travail jusqu'à ou depuis au moins un parmi les premier et second passages d'échange de chaleur, dans lequel le collecteur (3, 4, 5, 6) est soudé au cœur d'échangeur de chaleur (2) le long d'un joint collecteur à cœur (46) ;
dans lequel le cœur d'échangeur de chaleur (2) comporte une gorge (60, 60a, 60b) qui s'étend au moins partiellement le long du joint collecteur à cœur (46), dans lequel une section en coupe transversale de la gorge (60, 60a, 60b) présente une forme arrondie ;
**caractérisé en ce qu'**une profondeur (61) de la gorge (60, 60a, 60b) est plus importante que la moitié de la largeur (62) de la gorge (60, 60a, 60b) et la forme arrondie de la section en coupe transversale de la gorge (60) définit un rayon de courbure fini au niveau du joint collecteur à cœur (46).

2. Échangeur de chaleur selon la revendication 1, dans lequel le collecteur (3, 4, 5, 6) est lié autour d'une surface d'entrée ou de sortie de fluide de travail (45, 45a, 45b) du coeur d'échangeur de chaleur (2) et dans lequel la gorge (60, 60a, 60b) est formée dans ladite surface d'entrée ou de sortie de fluide de travail (45, 45a, 45b).

3. Échangeur de chaleur selon l'une quelconque des revendications 1 et 2, dans lequel une section en coupe transversale de la gorge (60) présente une forme spécifique qui est une parmi une forme sensiblement elliptique, une forme sensiblement parabolique et une forme sensiblement hyperbolique.

4. Échangeur de chaleur selon la revendication 3, dans lequel la forme spécifique est une forme elliptique et un centre (67) de la forme elliptique de la gorge (60, 60a, 60b) est localisé dans une plage qui s'étend depuis une position qui correspond à 25 % d'un rayon principal de la forme elliptique au-dessous d'un plan (68) de ladite surface d'entrée ou de sortie (45, 45a, 45b) jusqu'à une position qui correspond à 25 % du rayon principal de la forme elliptique au-dessus du plan (68) de ladite surface d'entrée ou de sortie, spécifiquement, dans lequel un centre (67) de la forme elliptique de la gorge (60, 60a, 60b) coïncide sensiblement avec le plan (68) de ladite surface d'entrée ou de sortie (45, 45a, 45b).

5. Échangeur de chaleur selon l'une quelconque des revendications 3 à 4, dans lequel la forme spécifique est une forme elliptique et une relation entre un rayon principal et un axe secondaire de la forme elliptique s'inscrit dans la plage qui va de 0,6 à 1,5, de façon spécifique, de 0,7 à 1,3 et de façon davantage spécifique, de 0,9 à 1,1.

6. Échangeur de chaleur selon l'une quelconque des revendications 3 à 5, dans lequel la forme spécifique est une forme elliptique et un rayon principal de la forme elliptique s'inscrit dans la plage qui va de 50 % à 150 %, de façon spécifique, de 75 % à 125 %, d'une épaisseur (70) de la paroi de collecteur.

7. Échangeur de chaleur selon l'une quelconque des revendications 1 à 6, dans lequel la gorge (60, 60a, 60b) est formée par usinage en utilisant un équipement de coupe de métal.

8. Échangeur de chaleur selon l'une quelconque des revendications 1 à 7, dans lequel la gorge (60, 60a, 60b) s'étend le long d'au moins 50 %, de façon spécifique, le long d'au moins 75 %, de façon davantage spécifique, le long d'au moins 95 % de la longueur totale du joint collecteur à cœur (46), et de la façon la plus spécifique, le long de la totalité de la longueur du joint collecteur à cœur (46).

9. Échangeur de chaleur selon l'une quelconque des revendications 2 à 8, dans lequel une surface de racine (41) du joint collecteur à cœur soudé (46) ne fait pas saillie au-dessus d'un plan (68) de ladite surface d'entrée ou de sortie (45, 45a, 45b).

10. Échangeur de chaleur selon l'une quelconque des revendications 1 à 9, dans lequel le cœur d'échangeur de chaleur (2) est constitué par une pluralité de plaques empilées (30, 30a, 30b) qui sont agencées en parallèle les unes aux autres et qui sont jointes les unes aux autres, de préférence au moyen d'un soudage ou d'un brasage à l'état solide ou au moyen d'une combinaison de ces deux procédés.

11. Échangeur de chaleur selon l'une quelconque des revendications 1 à 10, dans lequel chacun des premier et second passages d'échange de chaleur comprend une pluralité de conduits d'écoulement qui s'étendent entre une surface d'entrée de fluide de travail (45, 45a, 45b) et une surface de sortie de fluide de travail (45, 45a, 45b) du cœur d'échangeur de chaleur (2).

12. Échangeur de chaleur selon la revendication 11, dans lequel les conduits d'écoulement de la pluralité de conduits d'écoulement sont formés par des canaux ouverts (32, 33) dans une surface latérale de plaques empilées individuelles (30, 30a, 30b).

13. Échangeur de chaleur selon l'une quelconque des revendications 1 à 12, dans lequel l'échangeur de chaleur (1) est un échangeur de chaleur fixé par diffusion.

14. Échangeur de chaleur selon l'une quelconque des revendications 3 à 13, dans lequel chacune des surfaces d'entrée de fluide de travail et de sortie de fluide de travail (45, 45a, 45b) des premier et second passages d'échange de chaleur comprend un collecteur individuel (3, 4, 5, 6) qui lui est soudé.

15. Échangeur de chaleur selon l'une quelconque des revendications 2 à 14, dans lequel la largeur (62) de la gorge est définie en tant que distance suivant une ligne imaginaire entre le joint collecteur à coeur (46) et un point le plus adjacent sur la surface d'entrée ou de sortie de fluide de travail (45), et la profondeur (61) de la gorge est définie en tant que distance entre la ligne imaginaire et un point le plus distant à l'intérieur de la section en coupe transversale de la gorge (60).

16. Échangeur de chaleur selon la revendication 15, dans lequel la surface arrondie définit une courbure continue depuis le joint collecteur à cœur (46) le long d'au moins 10 % de la distance depuis le joint collecteur à cœur (46) en direction du point le plus distant, de préférence, le long d'au moins 20 % de la distance depuis le joint collecteur à cœur (46) en direction du point le plus distant, de façon davantage préférable, le long d'au moins 50 % de la distance depuis le joint collecteur à cœur (46) en direction du point le plus distant, de la façon la plus préférable, le long de la distance totale depuis le joint collecteur à cœur (46) et le point le plus distant.

17. Échangeur de chaleur selon la revendication 16, dans lequel la courbure continue définit un rayon de courbure décroissant depuis le joint collecteur à cœur (46) en direction du point le plus distant de la gorge (60, 60a, 60b).

18. Échangeur de chaleur selon l'une quelconque des revendications précédentes, dans lequel une relation entre la profondeur (61) et la largeur (62) de la gorge (60, 60a 60b) s'inscrit dans la plage qui va de 0,6 à 1,5, de façon spécifique, de 0,7 à 1,3 et de façon davantage spécifique, de 0,9 à 1,1.

19. Échangeur de chaleur selon l'une quelconque des revendications précédentes, dans lequel la profondeur (61) de la gorge s'inscrit dans la plage qui va de 50 % à 150 %, de façon spécifique, de 75 % à 125 %, d'une épaisseur (70) de la paroi de collecteur.

20. Procédé pour fabriquer un échangeur de chaleur (1) qui comprend un cœur d'échangeur de chaleur (2) qui comporte une pluralité de passages d'échange de chaleur et un collecteur (3, 4, 5, 6) pour convoyer un fluide de travail jusqu'à ou depuis la pluralité de passages d'échange de chaleur, le procédé comprenant :
la fourniture d'un cœur d'échangeur de chaleur (2) ;
l'usinage d'une gorge (60, 60a, 60b) dans le cœur d'échangeur de chaleur (2) au moins partiellement le long d'un joint collecteur à cœur prévu (46), dans lequel une section en coupe transversale de la gorge (60, 60a, 60b) présente une forme arrondie ;
le soudage du collecteur (3, 4, 5, 6) sur le cœur d'échangeur de chaleur (2) pour former ledit joint collecteur à cœur (46) ;
**caractérisé en ce qu'**une profondeur (61) de la gorge (60, 60a, 60b) est plus importante que la moitié de la largeur (62) de la gorge (60, 60a, 60b) et la forme arrondie de la section en coupe transversale de la gorge (60) définit un rayon de courbure fini au niveau du joint collecteur à cœur (46).
